# EUROPEAN PATENT APPLICATION

(11) **EP 4 378 806 A1**
(43) Date of publication of application: **05.06.2024**
(21) Application number: 23213360.3
(22) Date of filing: 30.11.2023
(51) Int. Cl.: B62D 55/24

(54) **RUBBER CRAWLER**

(30) Priority: 01.12.2022 JP 2022193016
(71) Applicant: Bridgestone Corporation, Chuo-Ku Tokyo 104-8340 (JP)
(72) Inventor: SUGAWA, Shohei, Tokyo, 1048340 (JP)
(74) Representative: Marks & Clerk LLP

(57) **Abstract**

Provided is a rubber crawler containing cored bars that is capable of firmly closing a sprocket hole and firmly compacting the earth and sand taken into a groove between rubber lugs when the crawler is on the ground to enhance the traction performance.

A rubber crawler (10) in which multiple cored bars (20) are embedded at regular intervals in a circumferential direction of the crawler in an endless belt-shaped rubber body (11), endless belt-shaped tension member layers (30), which extend in the crawler circumferential direction on a crawler outer circumferential side relative to the cored bars (20), are embedded in the endless belt-shaped rubber body (11) at both sides of a center in a width direction of the crawler, and a sprocket hole (15) into which teeth of a sprocket (2), around which the rubber crawler (10) is wound, enter is formed between the cored bars (20) adjacent in the crawler circumferential direction at the center in the crawler width direction of the endless belt-shaped rubber body (11), the rubber crawler being characterized in that a bottom portion of the sprocket hole (15) is formed by a rubber lug (12).

## Description

### [Technical Field]

The present invention relates to a rubber crawler in which multiple cored bars are embedded in a crawler circumferential direction in an endless belt-shaped rubber body having an endless belt shape.

### [Background Art]

In a rubber crawler, the earth and sand taken into a groove between adjacent rubber lugs located on a crawler outer circumferential side is compacted, so that traction occurs as a reaction force generated when the compacted earth and sand is sheared and broken.

The rubber crawler containing cored bars is wound around a sprocket and rotated.

The teeth of the sprocket enter a sprocket hole located between the adjacent cored bars and engage with sprocket engagement portions of the cored bars to rotate the rubber crawler.

There is an example in which the sprocket hole of the rubber crawler penetrates. However, in a case where the sprocket hole penetrates, the earth and sand escapes through the sprocket hole to a crawler inner circumferential side when the crawler is on the ground, and thus the earth and sand is compacted insufficiently, the shear force of the earth and sand causing traction decreases, and the traction performance cannot be secured enough.

To deal with this, there is an example in which the sprocket hole is closed by a rubber material of an endless belt-shaped rubber body (see Patent Documents 1 and 2).

### [Prior Art Document]

### [Patent Document]

Patent Document 1: JP 2018-75882 A
Patent Document 2: JP 6101329 B2

### [Summary of the Invention]

### [Underlying Problems to be solved by the Invention]

In the rubber crawler disclosed in Patent Document 1, the sprocket hole is closed by the thin rubber film between the rubber lugs to prevent the earth and sand from escaping. However, the rubber film is thin and easily damaged in construction machine applications where flaws easily occur, and thus cannot withstand continuous use.

In the rubber crawler disclosed in Patent Document 2, since the sprocket hole is closed by the rubber plate-shaped portion serving as the base from which the rubber lug of the endless belt-shaped rubber body protrudes, the rubber plate-shaped portion is more robust and less likely to be damaged than the rubber film.

However, the earth and sand taken into the groove between the rubber lugs, located below the rubber plate-shaped portion, when the crawler is on the ground is pressed by the rubber plate-shaped portion above which the sprocket hole is located and which is easily elastically deformed, so that the earth and sand is not compacted enough and the traction effect cannot be expected so much.

The present invention has been made in view of such a point, and aims to provide a rubber crawler containing cored bars that is capable of firmly closing a sprocket hole and firmly compacting the earth and sand taken into a groove between rubber lugs when the crawler is on the ground to enhance the traction performance.

### [Means to solve the Problems]

In order to achieve the above objective, the present invention provides a rubber crawler in which
multiple cored bars are embedded at regular intervals in a circumferential direction of the crawler in an endless belt-shaped rubber body that has an endless belt shape and has a rubber lug formed on an outer circumferential side of the crawler,
endless belt-shaped tension member layers, which extend in the crawler circumferential direction on the crawler outer circumferential side relative to the cored bars, are embedded in the endless belt-shaped rubber body at both sides of a center in a width direction of the crawler, and
a sprocket hole into which teeth of a sprocket, around which the rubber crawler is wound, enter is formed between the cored bars adjacent in the crawler circumferential direction at the center in the crawler width direction of the endless belt-shaped rubber body, the rubber crawler being characterized in that
a bottom portion of the sprocket hole is formed by the rubber lug.

According to this configuration, since the bottom portion of the sprocket hole is formed by the rubber lug, the sprocket hole can be firmly closed by the rubber lug.

In addition, since the sprocket hole is formed between the adjacent cored bars, a groove between the rubber lugs that close the sprocket holes is opposed to the cored bar, and thus the cored bar can press and firmly compact the earth and sand taken into the groove between the rubber lugs when the crawler is on the ground, which can increase the shear force of the earth and sand and enhance the traction performance.

In a preferred embodiment of the present invention,
a bottom surface of the sprocket hole is located at a position deeper than the tension member layers.

According to this configuration, since the bottom surface of the sprocket hole is located at a position deeper than the tension member layers, the teeth of the sprocket can enter to a sufficient depth without interfering with the bottom surface of the sprocket hole, so that the teeth of the sprocket can be effectively engaged with the cored bar and the effect of preventing the sprocket from coming off can also be enhanced.

In a preferred embodiment of the present invention,
a groove formed between adjacent ones of the rubber lugs of the endless belt-shaped rubber body partially overlaps, in the crawler thickness direction, with the cored bars and with a rolling wheel passage surface which is located on an inner circumferential side of the rubber crawler and on which a rolling wheel arranged along the ground rolls.

According to this configuration, when the rolling wheel rolling on the rolling wheel passage surface located on the inner circumferential side of the rubber crawler rolls above the cored bar, the cored bar can effectively press the earth and sand taken into the groove between the rubber lugs located below the cored bar and firmly compact the earth and sand, so that the traction performance can be further enhanced.

In a preferred embodiment of the present invention,
the groove includes: an outer groove that extends outward of the rolling wheel passage surface in the crawler width direction; and a central groove that is formed continuously with the outer groove at the center in the crawler width direction relative to the outer groove, and
a width in the crawler circumferential direction of a continuous groove portion of the outer groove continuous with the central groove is smaller than a width in the crawler circumferential direction of the central groove.

According to this configuration, when the earth and sand taken into the central groove is pressed by the rolling wheel from above via the cored bar, the earth and sand tends to flow out to the outer groove through the continuous groove portion. However, since the width in the crawler circumferential direction of the continuous groove portion is made smaller than that of the central groove, the earth and sand taken into the central groove is inhibited from flowing out, so that the earth and sand is firmly compacted, and thus the traction performance can be maintained at a high level.

In a preferred embodiment of the present invention,
at least an outer rubber lug portion of the rubber lug located on an outer side in the crawler width direction extends obliquely at an angle to the crawler width direction and laterally from a central side in the crawler width direction, and
a part of the outer rubber lug portion has a side surface parallel to the crawler width direction.

According to this configuration, since the outer rubber lug portion extending obliquely at an angle to the crawler width direction and laterally from the central side in the crawler width direction partially has the side surface parallel to the crawler width direction, the side surface parallel to the crawler width direction receives the earth and sand at the time of slip, so that the shear force of the earth and sand can be increased and traction can be expected to occur.

### [Effects of the Invention]

According to the present invention, the sprocket hole can be firmly closed by the rubber lug, and the cored bar can press and firmly compact the earth and sand taken into the groove between the rubber lugs when the crawler is on the ground, which can increase the shear force and enhance the traction performance.

### [Brief Description of Drawings]

Fig. 1 is a perspective view of a part of a crawler traveling device illustrating a partial cross section of a rubber crawler.
Fig. 2 is a developed plan view of an outer circumferential side of the rubber crawler.
Fig. 3 is a developed plan view of an inner circumferential side of the rubber crawler.
Fig. 4 is a cross-sectional view of the rubber crawler taken along line IV-IV in Figs. 2 and 3.
Fig. 5 is a cross-sectional view of the rubber crawler taken along line V-V in Figs. 2 and 3.
Fig. 6 is a cross-sectional view of the rubber crawler taken along line VI-VI in Figs. 2 and 3.

### [Mode for carrying out the Invention]

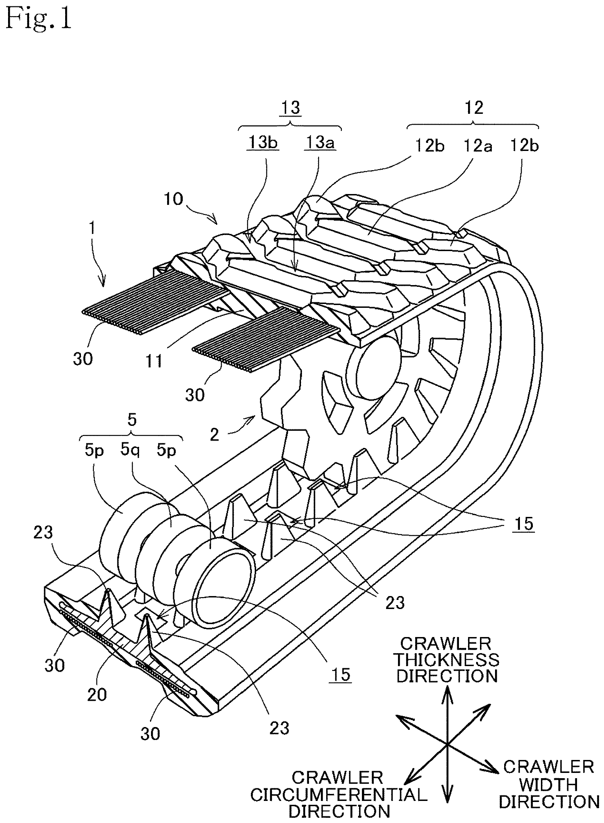

Hereinafter, an embodiment according to the present invention will be described with reference to Figs. 1 to 6.

Fig. 1 is a perspective view of a part of a crawler traveling device 1 illustrating a partial cross section of a rubber crawler.

The crawler traveling device 1 is used as a traveling device while being mainly mounted on a construction vehicle such as a compact track loader.

Note that, in Fig. 1, a crawler circumferential direction, a crawler width direction, and a crawler thickness direction of a portion of a rubber crawler 10 in contact with the ground are indicated by arrows.

In this crawler traveling device 1, the rubber crawler 10 containing cored bars and constituted in an endless belt shape is wound around two or three sprockets 2 attached to a vehicle.

One of the sprockets is a drive sprocket and the others are driven sprockets, and Fig. 1 illustrates one of the sprockets 2.

In the crawler traveling device 1, the rubber crawler 10 can rotate and travel by being driven to rotate by the drive sprocket.

On a crawler inner circumferential surface of a portion of the rubber crawler 10 in contact with the ground, multiple rolling wheels 5 are arranged at the front and rear along the ground.

The rolling wheels 5 are attached to a frame of the vehicle, and press the rubber crawler 10 in contact with the ground from above.

Such crawler traveling devices 1 are attached to both left and right sides of the vehicle in a vehicle width direction in pairs, and can be driven independently of each other.

In the rubber crawler 10 containing cored bars, multiple cored bars 20 are embedded in an endless belt-shaped rubber body 11, which is made of rubber being an elastic material formed in an endless belt shape, at regular intervals in the crawler circumferential direction (a rotation direction of the rubber crawler 10).

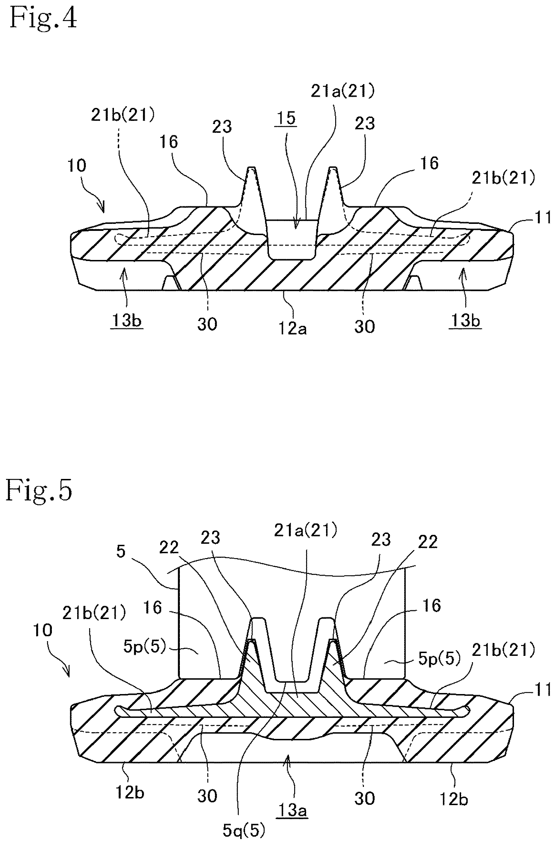

Referring to Figs. 4 to 6, the cored bars 20 embedded in the endless belt-shaped rubber body 11 each include: a cored bar main body 21 in the shape of a rectangular plate long in the crawler width direction; and a pair of cored bar protrusion portions 22, 22 that protrude from the cored bar main body 21 to the crawler inner circumferential side while being located close to the center in the crawler width direction of the cored bar main body 21.

The pair of cored bar protrusion portions 22, 22 face each other in the crawler width direction.

The cored bar main body 21 includes a sprocket engagement portion 21a with which teeth of the sprockets 2 engage at a position between the pair of cored bar protrusion portions 22, 22 located at the center in the crawler width direction, and cored bar blade portions 21b, 21b are formed on both outer sides of the pair of cored bar protrusion portions 22, 22.

In the cored bar 20, most of the cored bar 20 is covered with a rubber material of the endless belt-shaped rubber body 11 except for a part of the sprocket engagement portion 21a.

The pair of cored bar protrusion portions 22, 22 are covered with the rubber material to form guide protrusions 23, 23.

In the endless belt-shaped rubber body 11, rubber lugs 12 are formed so as to protrude to the outer circumferential side of the crawler.

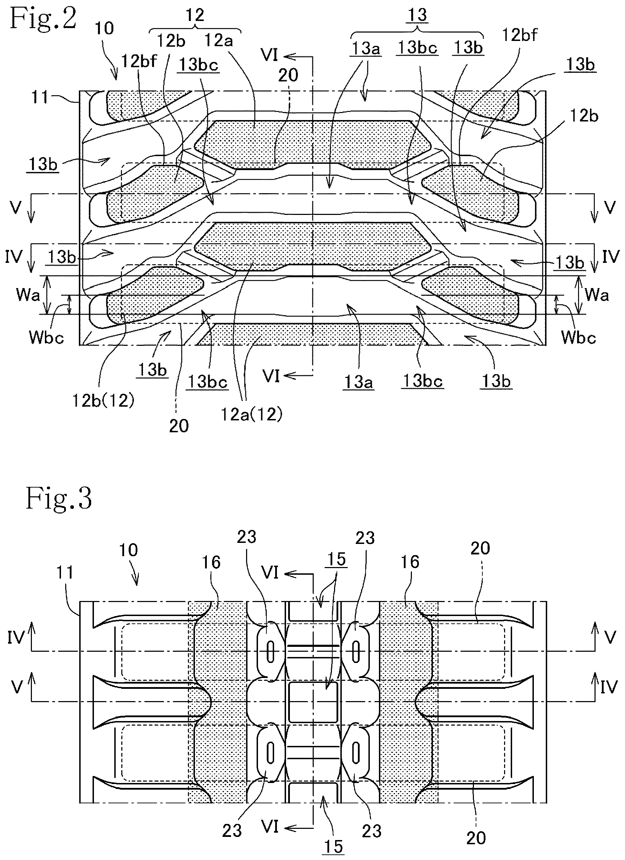

Referring to Fig. 2, the rubber lugs 12 are each constituted of a set of: a central rubber lug portion 12a that extends in the crawler width direction at the center in the crawler width direction; and outer rubber lug portions 12b, 12b that extend obliquely at an angle to the crawler width direction and laterally from the vicinity of both end portions of the central rubber lug portion 12a, and are formed on the outer circumferential side of the endless belt-shaped rubber body 11 at a constant pitch in the crawler circumferential direction.

A groove 13 is formed between the adjacent rubber lugs 12, 12.

As illustrated in Fig. 2, the groove 13 includes: a central groove 13a that is formed between the central rubber lug portions 12a and 12a adjacent in the crawler circumferential direction; and an outer groove 13b that is formed between the outer rubber lug portions 12b, 12b adjacent in the crawler circumferential direction, and both ends of the central groove 13a are continuous with the outer grooves 13b, 13b.

Referring to Fig. 2, the cored bar 20 indicated by a broken line is embedded at a position overlapping, in the crawler thickness direction, with the central groove 13a formed between the central rubber lug portions 12a, 12a adjacent in the crawler circumferential direction.

In the cored bar main body 21 long in the crawler width direction of the cored bar 20, the cored bar blade portions 21b, 21b located on its both sides reach the outer rubber lug portions 12b, 12b.

The sprocket engagement portion 21a between the pair of cored bar protrusion portions 22, 22 of the cored bar 20 is a portion with which the teeth of the rotating drive sprocket engage to transmit power to the rubber crawler 10.

Referring to Fig. 3, on the inner circumferential side of the rubber crawler 10, the pair of cored bar protrusion portions 22, 22 protrude from a portion where the cored bar 20 indicated by the broken line is embedded, and the sprocket engagement portion 21a is located between the pair of cored bar protrusion portions 22, 22.

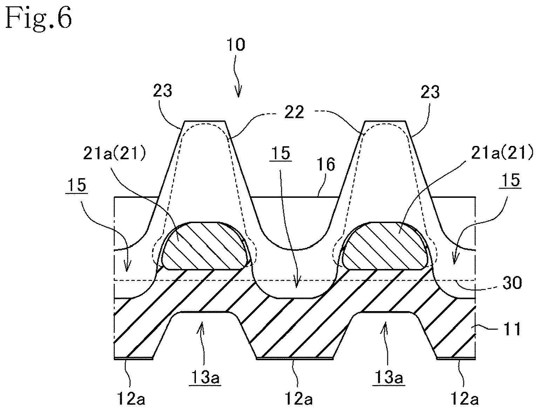

Referring to Figs. 3 and 6, sprocket holes 15 into which the teeth of the sprockets 2 enter are each formed between the sprocket engagement portions 21a, 21a adjacent in the crawler circumferential direction.

Since the sprocket hole 15 is located between the sprocket engagement portions 21a, 21a adjacent in the crawler circumferential direction, the sprocket hole overlaps with the central rubber lug portion 12a in the crawler thickness direction.

In other words, a bottom portion of the sprocket hole 15 is formed by the central rubber lug portion 12a (See Figs. 4 and 6).

Since the bottom portion of the sprocket hole 15 is formed by the central rubber lug portion 12a, the sprocket hole 15 can be firmly closed by the rubber lug 12.

Referring to Fig. 6, since the sprocket hole 15 is formed between the adjacent cored bars 20, 20, the central groove 13a between the central rubber lug portions 12a, 12a that close the sprocket holes 15 is opposed to the cored bar 20 in the crawler thickness direction, and thus the cored bar 20 can press and firmly compact the earth and sand taken into the central groove 13a when the crawler is on the ground, which can increase the shear force of the earth and sand and enables traction to reliably occur.

Referring to Figs. 1 and 4, in the endless belt-shaped rubber body 11, on the crawler outer circumferential side relative to the cored bar main body 21 of the cored bar 20, steel cord layers 30 in which steel cords, which are endless belt-shaped tension members extending in the crawler circumferential direction, are arranged are embedded at both sides of the center in the crawler width direction.

The steel cord layers 30 are each disposed between the cored bar protrusion portion 22 of the cored bar 20 and a portion in front of an end portion of the cored bar blade portion 21b of the cored bar in the crawler width direction.

The pair of steel cord layers 30, 30 are embedded at both sides of the center of the endless belt-shaped rubber body 11 in the crawler width direction.

As illustrated in Fig. 4, the sprocket hole 15 at the center of the crawler inner circumferential surface in the crawler width direction is located between the pair of steel cord layers 30, 30, and a bottom surface 15b of the sprocket hole 15 is located at a position deeper than the steel cord layers 30.

Since the bottom surface 15b of the sprocket hole 15 is located at a position deeper than the steel cord layers 30, 30, the teeth of the sprocket 2 can enter to a sufficient depth without interfering with the bottom surface of the sprocket hole 15, so that the sprocket 2 can be effectively engaged with the sprocket engagement portion 21a of the cored bar 20 and the effect of preventing the sprocket from coming off can also be enhanced.

Referring to Figs. 1 and 5, the rolling wheels 5 that roll on the crawler inner circumferential surface of the rubber crawler 10 in contact with the ground each have an integrated structure in which a pair of wheel bodies 5p, 5p having the same shape are coaxially connected by a connecting wheel body 5q.

Referring to Fig. 5, in each rolling wheel 5, the pair of wheel bodies 5p, 5p press both outer side portions of the pair of guide protrusions 23 and 23 protruding from the crawler inner circumferential surface of the rubber crawler 10.

Thus, as illustrated in Fig. 3, portions of the crawler inner circumferential surface of the rubber crawler 10 located at both outer sides of the pair of guide protrusions 23, 23 form rolling wheel passage surfaces 16, 16 (surfaces indicated by dotted patterns in Fig. 3) on which the pair of wheel bodies 5p, 5p of the rolling wheel 5 arranged along the ground roll and pass.

As illustrated in Fig. 5, both end portions of the central groove 13a formed on the outer circumferential side of the endless belt-shaped rubber body 11 at a position between the central rubber lug portions 12a, 12a overlap, in the crawler thickness direction, with the cored bar main body 21 of the cored bar 20 and with the rolling wheel passage surfaces 16, 16 located on the inner circumferential side of the rubber crawler 10.

Accordingly, the rolling wheels 5 that roll on the rolling wheel passage surfaces 16, 16 press the cored bar blade portions 21b, 21b, being both side portions of the cored bar main body 21 of the cored bar 20, via the rubber material, so that the cored bar main body 21 is pressed while maintaining its balance.

Thus, the cored bar main body 21 pressed by the rolling wheel 5 while maintaining its balance can apply, via the rubber material at the bottom portion of the central groove 13a formed between the central rubber lug portions 12a, 12a, a load evenly on the earth and sand taken into the central groove 13a when the crawler is on the ground. This makes it possible to compact the earth and sand taken into the central groove 13a evenly, and thus to further enhance the traction performance.

Referring to Fig. 2, as described above, both ends of the central groove 13a are continuous with the outer grooves 13b, 13b, and a width Wbc in the crawler circumferential direction of continuous groove portions 13bc, 13bc of the outer grooves 13b, 13b continuous with the central groove 13a is smaller than a width Wa in the crawler circumferential direction of the central groove 13a.

When the earth and sand, taken into the central groove 13a when the crawler is on the ground, is pressed by the rolling wheel 5 from above via the cored bar 20, the earth and sand tend to flow out to the outer groove 13b through the continuous groove portion 13bc. However, since the width Wbc in the crawler circumferential direction of the continuous groove portion 13bc is made smaller than the width Wa in the crawler circumferential direction of the central groove 13a, the earth and sand taken into the central groove is inhibited from flowing out, so that the earth and sand is firmly compacted, and thus the traction performance can be maintained.

The outer rubber lug portions 12b, 12b on both outer sides of the rubber lug 12 extend obliquely at an angle to the crawler width direction, but as illustrated in Fig. 2, the outer rubber lug portions 12b, 12b have side surfaces 12bf, 12bf, which are parallel to the crawler width direction, on their central side end portions.

Since each outer rubber lug portion 12b extending obliquely at an angle to the crawler width direction has the side surface 12bf, parallel to the crawler width direction, on its central side end portion, the side surface 12bf parallel to the crawler width direction receives the earth and sand at the time of slip and takes the earth and sand into the outer groove 13b located between the adjacent outer rubber lug portions 12b, 12b, so that the shear force can be increased and the traction effect can be expected.

Although the rubber crawler according to one embodiment of the present invention has been described above, aspects of the present invention are not limited to the above embodiment, and include those implemented in various aspects within the scope of the gist of the present invention.

### [Reference Signs List]

- 1: Crawler traveling device
- 2: Sprocket
- 5: Rolling wheel
- 10: Rubber crawler
- 11: Endless belt-shaped rubber body
- 12: Rubber lug
- 12a: Central rubber lug portion
- 12b: Outer rubber lug portion
- 13: Groove
- 13a: Central groove
- 13b: Outer groove
- 13bc: Continuous groove portion
- 15: Sprocket hole
- 16: Rolling wheel passage surface
- 20: Cored bar
- 21: Cored bar main body
- 21a: Sprocket engagement portion
- 21b: Cored bar blade portion
- 22: Cored bar protrusion portion
- 23: Guide protrusion
- 30: Steel cord layer

## Claims

1. A rubber crawler (10) in which
a plurality of cored bars (20) is embedded at regular intervals in a circumferential direction of the crawler in an endless belt-shaped rubber body (11) that has an endless belt shape and has a rubber lug (12) formed on an outer circumferential side of the crawler,
endless belt-shaped tension member layers (30), which extend in the crawler circumferential direction on the crawler outer circumferential side relative to the cored bars (20), are embedded in the endless belt-shaped rubber body (11) at both sides of a center in a width direction of the crawler, and
a sprocket hole (15) into which teeth of a sprocket (2), around which the rubber crawler (10) is wound, enter is formed between the cored bars (20) adjacent in the crawler circumferential direction at the center in the crawler width direction of the endless belt-shaped rubber body (11), wherein
a bottom portion of the sprocket hole (15) is formed by the rubber lug (12).

2. The rubber crawler according to claim 1, wherein a bottom surface of the sprocket hole (15) is located at a position deeper than the tension member layers (30).

3. The rubber crawler according to claim 1, wherein a groove (13) formed between adjacent ones of the rubber lugs (12, 12) of the endless belt-shaped rubber body (11) partially overlaps, in the crawler thickness direction, with the cored bars (20) and with a rolling wheel passage surface (16) which is located on an inner circumferential side of the rubber crawler (10) and on which a rolling wheel (5) arranged along the ground rolls.

4. The rubber crawler according to claim 3, wherein
the groove (13) includes: an outer groove (13b) that extends outward of the rolling wheel passage surface (16) in the crawler width direction; and a central groove (13a) that is formed continuously with the outer groove (13b) at the center in the crawler width direction relative to the outer groove (13b), and
a width (Wbc) in the crawler circumferential direction of a continuous groove portion (13bc) of the outer groove (13b) continuous with the central groove (13a) is smaller than a width (Wa) in the crawler circumferential direction of the central groove (13a).

5. The rubber crawler according to any one of claims 1 to 4, wherein
at least an outer rubber lug portion (12b) of the rubber lug (12) located on an outer side in the crawler width direction extends obliquely at an angle to the crawler width direction and laterally from a central side in the crawler width direction, and
a part of the outer rubber lug portion (12b) has a side surface (12bf) parallel to the crawler width direction.
